# EUROPÄISCHE PATENTSCHRIFT

(11) **EP 2 318 920 B1**
(45) Veröffentlichungstag und Bekanntmachung des Hinweises auf die Patenterteilung: **02.11.2011**
(21) Anmeldenummer: 09780184.9
(22) Anmeldetag: 06.07.2009
(51) Int. Cl.: G06F 9/445

(54) **STEUERGERÄT FÜR EIN FAHRZEUG UND VERFAHREN FÜR EINE DATENAKTUALISIERUNG FÜR EIN STEUERGERÄT FÜR EIN FAHRZEUG**
CONTROL APPLIANCE FOR A VEHICLE, AND METHOD FOR UPDATING DATA FOR A CONTROL APPLIANCE FOR A VEHICLE
APPAREIL DE COMMANDE DESTINÉ À UN VÉHICULE ET PROCÉDÉ D'ACTUALISATION DE DONNÉES POUR UN APPAREIL DE COMMANDE DESTINÉ À UN VÉHICULE

(30) Priorität: 20.08.2008 DE 102008041360
(43) Veröffentlichungstag der Anmeldung: 11.05.2011
(73) Patentinhaber: Robert Bosch GmbH, 70442 Stuttgart (DE)
(72) Erfinder: FISLAGE, Markus, 71229 Leonberg (DE)
(86) Internationale Anmeldenummer: PCT/EP2009/058503
(87) Internationale Veröffentlichungsnummer: WO 2010/020465

(56) Entgegenhaltungen:
- EP-A- 0 642 090
- DE-A1- 4 425 388

## Beschreibung

### Stand der Technik

Die Erfindung betrifft ein Steuergerät für ein Fahrzeug bzw. ein Verfahren für eine Datenaktualisierung für ein Steuergerät für ein Fahrzeug nach der Gattung der unabhängigen Patentansprüche.

Aus EP 1 701 262 B1 ist bereits ein Verfahren und eine Vorrichtung zum Wiederbeschreiben eines Sektors mit Bootloader-Software in einem sektorlöschbaren, nichtflüchtigen Halbleiterspeicher bekannt. Dabei wird angegeben, dass in einem ersten Sektor eines nichtflüchtigen Speichers für einen Controller ein sogenannter Bootloader-Code vorgesehen ist. Beim Start wird diese Bootloader-Software geladen und sorgt für die Einrichtung der Hardware des Controllers, beispielsweise der Schnittstellen, so dass ein Anwendungsprogramm von diesen Schnittstellen Gebrauch machen kann.

### Offenbarung der Erfindung

Das erfindungsgemäße Steuergerät für ein Fahrzeug bzw. das erfindungsgemäße Verfahren für eine Datenaktualisierung für ein Steuergerät für ein Fahrzeug mit den Merkmalen der unabhängigen Patentansprüche haben demgegenüber den Vorteil, dass nunmehr eine hohe Flexibilität bei der Auswahl von Bereichen eines Speichers besteht, in denen Daten aktualisiert werden, wobei die Daten durch ein Anwendungsprogramm bei seinem Ablauf genutzt werden. Dies gelingt dadurch, dass die Daten, die angeben, in welchem Bereich die Daten aktualisiert werden sollen, mit dem Anwendungsprogramm im gleichen Bereich eines weiteren Speichers abgelegt sind. Damit kann durch eine Aktualisierung der Anwendung auch eine Aktualisierung dieser Daten erfolgen. Durch diese Flexibilität ist es möglich, dass kein Speicherplatz für eine Pufferung vorzuhalten ist, da beliebige Bereiche in dem Speicher, in dem die Daten aktualisiert werden, ausgewählt werden können. Außerdem können nur solche Aktualisierungsvorgänge durchgeführt werden, die gezielt nur das aktualisieren, was auch benötigt wird. Insbesondere ermöglicht es der Gegenstand der unabhängigen Patentansprüche, dass nur der zweite Speicher mit den Daten für die Anwendung, üblicherweise ein EEPROM, bezüglich seiner Daten aktualisiert wird.

Dies ermöglicht, wenn bereits Steuergeräte beispielsweise in Fahrzeugen eingebaut sind, im Nachhinein Verbesserungen der Daten, beispielsweise über einen Werkstattaufenthalt oder über eine Fernwartung leicht vornehmen zu können. Eine große Flexibilität ist durch die vorliegende Erfindung gegeben. Durch die flexible Auswahl von Adressbereichen im zweiten Speicher, d. h. dem EEPROM, kann dieser Speicherbereich optimal genutzt werden. Wie oben beschrieben ist eine zusätzliche Vorhaltung von freiem Speicherbereich nicht mehr notwendig. Durch diese Flexibilisierung ist es möglich, selbst unerwartete selektive Datenbereiche im zweiten Speicher zu aktualisieren. Jede denkbare Korrektur dieses Speicherinhalts wird möglich.

Somit ist ein kostengünstigeres und flexibleres Steuergerät und ein entsprechendes Verfahren möglich.

Ein Steuergerät ist vorliegend ein elektrisches Gerät, das Sensorsignale verarbeitet und in Abhängigkeit davon Dauersignale erzeugt. Vorliegend kann es sich insbesondere um ein Airbagsteuergerät, ein Steuergerät für eine Fahrdynamikregelung oder ein Motorsteuergerät handeln. Aber auch andere Steuergeräte innerhalb oder außerhalb eines Fahrzeugs, sind möglich.

Der erste Speicher weist den ersten Bereich auf, in dem der Bootloader vorgesehen ist. Dieser erste Bereich ist üblicherweise vor einer Aktualisierung geschützt, um immer wieder eine Neuprogrammierung der übrigen Speicher zu ermöglichen. Das Instrument für diese Neuprogrammierung oder Datenaktualisierung ist der Bootloader, mithin eine Software. Dieser erste Speicher ist beispielsweise als ein ROM (Read only Memory) ausgebildet und dabei typischerweise als ein nichtflüchtiger Halbleiterspeicher ausgeführt. Es sind jedoch auch alle anderen geeigneten Speichertechnologien möglich. Dieser erste Speicher weist einen zweiten Bereich auf, der sich vom ersten Bereich unterscheidet und in diesem Bereich ist wenigstens ein Anwendungsprogramm abgespeichert. Dieses Anwendungsprogramm ist beispielsweise bei einem Airbagsteuergerät ein Airbagalgorithmus. Bei einem anderen Steuergerät kann es sich um andere Programme wie eine Fahrdynamikregelung oder eine Motorsteuerung oder um den Betrieb eines Kommunikationsgeräts handeln. Weitere Anwendungsmöglichkeiten sind vorliegend möglich.

Der zweite Bereich dieses ersten Speichers ist mit neuen Daten aktualisierbar. Dafür kann bei nichtflüchtigen Halbleiterspeichern die sogenannte Flash-Speicherung verwendet werden. Bei Flash-Speichern können oft nur ganze Sektoren auf einmal gelöscht werden. Daher stammt auch der Name Flash, der an die in Blöcken stattfindende Löschung des Speichers erinnert. Auch die Speicherung findet in größeren Blöcken statt.

Erfindungskennzeichnend ist vorliegend, dass in dem Anwendungsprogramm die Daten abgespeichert sind, die es dem Bootloader angeben, in welchem Bereich eines weiteren Speichers, beispielsweise eines EEPROM'S, die Daten, die aktualisiert werden sollen, abzuspeichern sind. Wie aus den abhängigen Ansprüchen hervorgeht, kann auch das Anwendungsprogramm und damit diese Daten, die per Indizierung angeben, wo die Daten in dem weiteren Speicher zu aktualisieren sind, selbst aktualisiert werden. Diese Daten sind jedoch im ersten Bereich des ersten Speichers vorhanden und damit nicht flexibel.

Der zweite Speicher ist ebenfalls beispielsweise über ein Flashspeichern aktualisierbar, es handelt sich vorwiegend um ein EEPROM. In diesem zweiten Speicher werden die ersten Daten abgespeichert, die das Anwendungsprogramm für seinen Betrieb benötigt. Bei einem Airbagalgorithmus sind das beispielsweise die Algorithmusparameter oder auch Ausstattungsmerkmale, d. h. welche Hardware ist vorliegend vorhanden, Diagnosedaten, Typtagenummern, Versionsbezeichnungen usw. Diese Daten können dann in diesen zweiten Speicher in sogenannten Sektionen vorgesehen sein, die zusammengehörende Daten umfassen.

Der erste und der zweite Speicher können auf unterschiedlichen oder gemeinsamen Halbleiterbausteinen realisiert sein. Notwendig ist nur, dass die beiden Speicher logisch voneinander getrennt sind.

Bei der Schnittstelle handelt es sich beispielsweise um Hardware und/oder Software, die die Daten, die von außen zugeführt werden, für die Aktualisierung, zumindest eines Teils der ersten Daten, bereitstellt. D. h. nicht alle ersten Daten im zweiten Speicher, also dem EEPROM, müssen aktualisiert werden, sondern es kann auch nur ein Teil davon oder Teile, die voneinander getrennt sind, aktualisiert werden. Die Schnittstelle kann dabei beispielsweise als sogenannter CAN-Transceiver oder eine andere Datenübertragungsschnittstelle ausgebildet sein. Die Schnittstelle überträgt dann diese Daten beispielsweise für einen Prozessor, der vorliegend als Steuerschaltung bezeichnet ist.

Die Steuerschaltung kann alle möglichen Formen von Prozessoren, insbesondere auch Mikrocontroller, die zumindest einen oder auch mehrere Rechenkerne aufweisen, sein. Die Steuerschaltung ruft diesen Bootloader zu Beginn auf, um, wenn die Daten von außen durch die Schnittstelle bereitgestellt werden, die Aktualisierung, zumindest eines Teils der ersten Daten, durch diese zweiten Daten, die von außen bereitgestellt werden, durchzuführen. Die Aktivierung der Steuerschaltung wird meist über eine Kontrollschnittstelle in Form eines geschützten Bereichs im EEPROM oder in einem nicht löschbarem RAM-Bereich sichergestellt.

Der Bootloader, der beispielsweise im Stand der Technik bereits definiert ist, ist ein Programm, das zumindest diese Aktualisierung durchführt und im ersten Speicherbereich des ersten Speichers vorgesehen ist. Dafür holt sich der Bootloader aus dem zweiten Bereich des ersten Speichers, also aus dem Anwendungsprogramm, die dritten Daten, die angeben, in welchem dritten Bereich des zweiten Speichers die zweiten Daten für eine Aktualisierung zu schreiben sind. Dieser dritte Bereich im zweiten Speicher, also im EEPROM, kann zusammenhängend oder auch mehrere Teilbereiche umfassen. Im Extremfall kann der gesamte Bereich des zweiten Speichers gemeint sein. Dabei beschreibt eine Aktualisierung ein Überschreiben der alten Daten durch die neuen Daten, die von außen bereitgestellt wurden.

Durch die in den abhängigen Ansprüchen aufgeführten Maßnahmen und Weiterbildungen sind vorteilhafte Verbesserungen des in den unabhängigen Patentansprüchen angegebenen Steuergeräts für ein Fahrzeug bzw. für eine Datenaktualisierung für ein Steuergerät für ein Fahrzeug möglich.

Es ist vorteilhaft, dass die dritten Daten wenigstens einen ersten zusammenhängenden Adressbereich von Speicheradressen im zweiten Speicher angeben. Wie oben angegeben, geben die dritten Daten an, wo im zweiten Speicher die neuen Daten zu schreiben sind. Dieses Schreiben kann dabei löschen und neu beschreiben bedeuten. Dieser zusammenhängende Adressbereich ermöglicht die Definition eines logisch zusammenhängenden Bereichs von Speicheradressen. Dies reduziert die Fehleranfälligkeit im Vergleich zu der Verwendung von direkten Speicheradressen. Die Speicheradressen adressieren dabei einzelne Speicherzellen eines beispielsweise Halbleiterspeichers.

Es ist weiterhin vorteilhaft, dass der Bootloader mit den zweiten Daten, das sind die Aktualisierungsdaten, das wenigstens eine Anwendungsprogramm und damit die dritten Daten aktualisiert. Dies wurde bereits oben angesprochen, dass das Anwendungsprogramm an sich beispielsweise der Airbagalgorithmus durch die beschriebene Vorgehensweise aktualisiert werden kann, wobei allerdings dann die Speicherbereiche, die dabei überschrieben werden sollen, im ersten Bereich des ersten Speichers, wo auch der Bootloader angeordnet ist, beispielsweise in Form einer Liste oder Matrix vorgesehen sind. D. h. dieser erste Bereich des ersten Speichers ROM ist dauerhaft und nicht überschreibbar vorgesehen. Hiermit ist es nun allerdings möglich, auch nur die dritten Daten durch die beschriebene Methodik zu aktualisieren. Damit können dann die Adressbereiche im zweiten Speicher EEPROM neu aufgeteilt werden, um somit neuen Gegebenheiten flexibel zu entsprechen. Stellt sich beispielsweise heraus, dass ein gewisser Speicherbereich im zweiten Speicher EEPROM einen neuen Datensatz enthalten soll, aber dieser Speicherbereich war bisher im Anwendungsprogramm bezüglich seines Adressbereichs nicht beschrieben bzw. nicht indiziert, dann kann dies durch die vorliegende Maßnahme nachgeholt werden, so dass nunmehr es möglich ist, jeden Adressbereich im zweiten Speicher gezielt anzusprechen.

Darüber hinaus ist es vorteilhaft, dass im ersten Bereich des ersten Speichers vierte Daten vorgesehen sind, die wenigstens einen zweiten zusammenhängenden Adressbereich der Speicheradressen im ersten Speicher angeben. Dies wurde bereits oben beschrieben, dass im ersten Bereich der Adressbereich im ersten Speicher im zweiten Bereich festgelegt ist, in dem das Anwendungsprogramm aktualisiert werden soll, durch die zweiten Daten.

Weiterhin ist es vorteilhaft, dass der Bootloader ein Konsistenzprüfungsmodul aufweist, wobei das Konsistenzprüfungsmodul wenigstens einen Teil der ersten Daten, die im zweiten Speicher bevorratet sind, in den jeweiligen ersten Adressbereichen dahingehend prüft, ob das wenigstens eine Anwendungsprogramm diesen Teil der ersten Daten in diesen jeweiligen Adressbereichen erwartet. Die Konsistenzprüfung ist notwendig, damit fehlerhafte Ladevorgänge in dem zweiten Speicher vor einer Benutzung des Anwendungsprogramms ermittelt werden können, um eine fehlerhafte Funktion eines beispielsweise auch sensiblen Anwendungsprogramms zu vermeiden. Dies ist insbesondere beispielsweise bei einem Airbagauslösealgorithmus von höchster Bedeutung. Dabei kann dann das Konsistenzprüfungsmodul zumindest einen Teil dieser ersten Daten im zweiten Speicher prüfen, ob diese ersten Daten jeweils an den richtigen Adressbereichen abgespeichert wurden. Dies kann durch die Prüfung einer Marke, beispielsweise zu Beginn der jeweiligen Adressbereiche und/oder einer Prüfsumme, wofür beispielsweise die bekannte CRC-Methode verwendet werden kann und/oder eine Formatprüfung in den jeweiligen ersten Adressbereichen untersucht werden. Bei der Formatprüfung kann beispielsweise eine Länge der abgespeicherten Daten geprüft werden, die im Anwendungsprogramm bekannt ist. Ebenso können Layout-Informationen und CRC-Absicherungen, die die Anwendung nutzt, auch im Bootloader zur Konsistenzprüfung verwendet werden. Bei den Layout-Informationen wird typischerweise eine Layout-ID eingeführt, die hochgezählt wird, wann immer sich das Format eines Bereiches ändert. Ein Rücksprung in die Anwendung ist nur möglich, wenn diese Prüfung positiv ist.

Vorteilhafter Weise ist, wie oben bereits angegeben, der erste Speicher ein sogenanntes ROM und der zweite Speicher ein EEPROM, die beide vorzugsweise als nicht flüchtige Halbleiterspeicher ausgebildet sind.

Ausführungsbeispiele der Erfindung sind in der Zeichnung dargestellt und werden in der nachfolgenden Beschreibung näher erläutert.

### Es zeigen

Figur 1 ein Blockschaltbild des erfindungsgemäßen Steuergeräts mit angeschlossenen Komponenten,
Figur 2 ein Blockschaltbild über das erfindungsgemäße Verfahren,
Figur 3 ein erstes Flussdiagramm des erfindungsgemäßen Verfahrens,
Figur 4 ein zweites Flussdiagramm des erfindungsgemäßen Verfahrens und
Figur 5 ein drittes Flussdiagramm des erfindungsgemäßen Verfahrens.

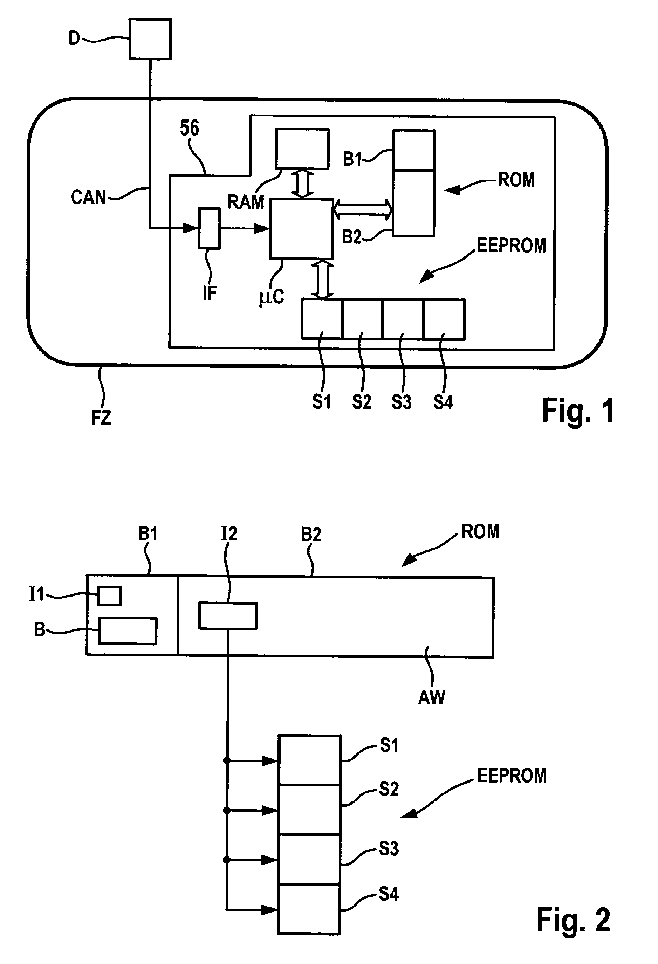

Figur 1 zeigt in einem Blockschaltbild das erfindungsgemäße Steuergerät SG in einem Fahrzeug FZ mit einer angeschlossenen Komponente, einem Diagnosegerät D, das von außerhalb des Fahrzeugs FZ über einen CAN-Bus CAN angeschlossen wird. Vorliegend sind nur die für das Verständnis der Erfindung notwendigen Komponenten des Steuergeräts und seiner angeschlossenen Peripherie beschrieben. Weitere für den Betrieb des Steuergeräts SG notwendige Komponenten sind der Einfachheit halber weggelassen worden.

Das Diagnosegerät D, beispielsweise ein Rechner in einer Werkstatt oder auch ein Rechner über eine Fernwartung, wobei beispielsweise über eine Funkverbindung dann die Verbindung mit dem CAN-Bus CAN hergestellt wird, überträgt Aktualisierungsdaten zu dem Steuergerät SG und dabei zu einem CAN-Transceiver IF als der Schnittstelle. Der CAN-Transceiver IF formatiert die Daten für ein im Steuergerät geeignetes Übertragungsformat um an den Mikrocontroller µC. Der Mikrocontroller µC erkennt die neuen Daten, die für eine Aktualisierung von Daten im ROM bzw. dem weiteren Speicher EEPROM vorgesehen sind. Diese Daten werden eingespielt und je nach Ablauf verifiziert. Zusätzlich wird eine Konsistenzprüfung eingeführt, um sicherzustellen, dass Bereiche, die nicht explizit beschrieben wurden, noch in Ordnung sind und zur Anwendung passen. Dieses muss erfüllt sein, damit die Anwendung wieder gestartet werden kann.

Der Mikrocontroller µC ruft für die Aktualisierung aus dem ersten nicht löschbaren Bereich B1 des ersten Speichers ROM den Bootloader und lädt ihn beispielsweise in den Arbeitsspeicher RAM. Der Bootloader aktualisiert die Speicherinhalte des ersten Speichers ROM und des zweiten Speichers EEPROM mit den neuen Daten, in dem für die Aktualisierung des ersten Speichers ROM aus dem ersten Bereich B1 die Speicherbereiche entnimmt, die aktualisiert werden können, nämlich der Bereich B2, in dem das Anwendungsprogramm angeordnet ist und auch die Daten, die angeben, welche Bereiche im zweiten Speicher EEPROM zu aktualisieren sind.

Nach der Aktualisierung des ersten Speichers ROM wird nun der zweite Speicher EEPROM aktualisiert. Dafür entnimmt der Bootloader aus dem zweiten Bereich B2 die Speicherbereiche, die im zweiten Speicher EEPROM aktualisiert werden sollen. Beispielhaft sind vorliegend vier Sektionen S1, S2, S3 und S4 des zweiten Speichers EEPROM dargestellt, die en bloc gemäß den Daten im zweiten Bereich B2 des ersten Speichers ROM aktualisiert werden können. Der Bootloader aktualisiert also die Daten im zweiten Speicher EEPROM gemäß den Adressdaten aus dem zweiten Bereich B2. Der zweite Speicher EEPROM weist die Daten auf, die das Anwendungsprogramm im Bereich B2 für seinen Ablauf benötigt. Diese Daten sind beispielsweise Algorithmusparameter, Ausstattungsmerkmale, Variantennummern usw.

Nach Abschluss dieser Aktualisierung führt nun der Bootloader eine Konsistenzprüfung der aktualisierten Daten im ersten Speicher ROM und dem zweiten Speicher EEPROM durch. Diese Konsistenzprüfung kann durch einzelne oder eine Kombination von folgenden Maßnahmen durchgeführt werden:
1. Prüfung einer Marke
   Hierbei wird eine sogenannte Marke, die zu Beginn jedes Speicherbereichs S1, S2, S3 bzw. S4 angeordnet ist, gelesen und geprüft, ob diese Marke an diesem Speicherort erwartet wird. Diese Daten, ob dies so erwartet wird, sind im zweiten Speicherbereich des ersten Speichers ROM enthalten. Diese Konsistenzprüfung kann auch für den zweiten Bereich B2 des ersten Speichers ROM durchgeführt werden. Dann sind diese Daten im ersten Bereich B1 enthalten und sind ungefähr ein Byte lang.
2. Prüfsummencheck durch einen sogenannten Cyclic Redundancy Check (CRC) kann die Konsistenz der Daten in den einzelnen Bereichen S1, S2, S3 und S4 bzw. im zweiten Bereich B2 durchgeführt werden. Die CRCs werden explizit durch den Flash-Ablauf geprüft. Darüber hinaus können als abschließende Prüfung alle CRCs geprüft werden.
3. Formatprüfung

Weiterhin ist es möglich, die Länge der einzelnen Speicherbereiche S1, S2, S3 und S4 zu prüfen, wobei diese Längen dann im zweiten Bereich des ersten Speichers ROM enthalten sind. Dies kann analog für den zweiten Speicherbereich B2 des ersten Speichers ROM durchgeführt werden. Dann sind die Längen im ersten Speicherbereich B1 enthalten.

Ist diese Konsistenzprüfung erfolgreich, kann dann mit dem Ablauf des Anwendungsprogramms begonnen werden.

Figur 2 zeigt in einem Blockschaltbild den Ablauf des erfindungsgemäßen Verfahrens und die Anordnung der entsprechenden Daten. Das ROM weist den ersten Bereich B1 und den zweiten Bereich B2 auf. Im zweiten Bereich B2 ist das Anwendungsprogramm AW enthalten. Ebenfalls in dem Anwendungsprogramm AW sind die Daten I2 enthalten, die die Speicherbereiche mithin die Indizierung im zweiten Speicher EEPROM, nämlich S1, S2, S3 und S4 angeben. Im ersten Speicherbereich B1 ist die Indizierung I1 für den zweiten Speicherbereich B2 enthalten und ebenso der Bootloader B. Weitere Programme können vorgesehen sein. Dadurch, dass der zweite Speicherbereich B2 aktualisiert werden kann, kann auch die Indizierung IC aktualisiert werden, um so neue Speicherbereiche im EEPROM zu definieren, die aktualisiert werden sollen.

Die einzelnen Speicherbereiche S1, S2, S3 und S4 beginnen mit sogenannten Layout-ID's, die als Marke dienen. Diese Layout-ID's, die üblicherweise ein Byte lang sind, geben an, um was für einen Speicherbereich es sich vorliegend handelt. Dies kann dann später bei der Konsistenzprüfung verwendet werden. Ein einzelner Speicherbereich kann eine unterschiedliche Länge, beispielsweise 10 Bite aufweisen. Es ist weiterhin möglich, auch eine Abhängigkeitsliste abzulegen, die angibt, welche Sektion Formatänderung, welche Abschnitte S1, S2, S3 oder S4 betrifft.

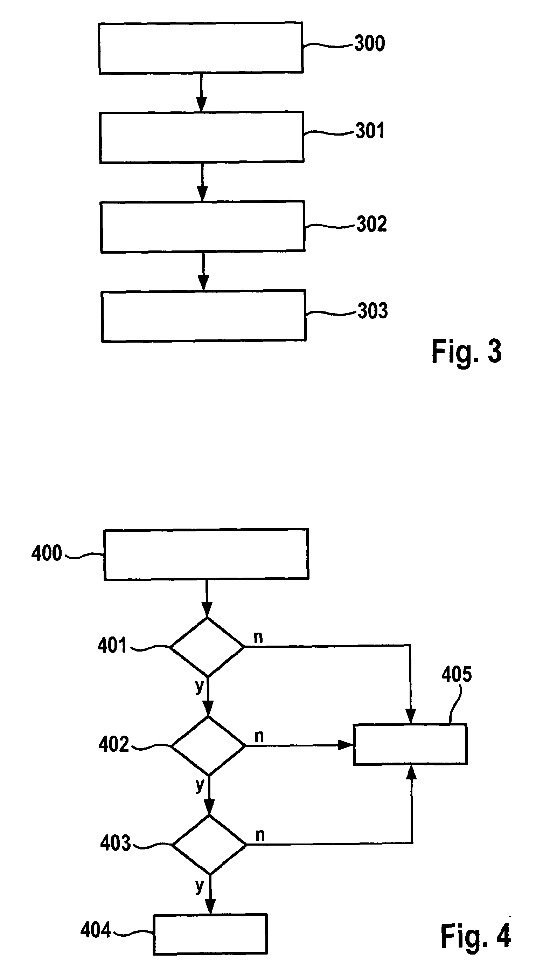

Figur 3 zeigt in einem Flussdiagramm das erfindungsgemäße Verfahren. Gemäß Verfahrensschritt 300 werden die neuen Daten über die Schnittstelle IF importiert. Der Mikrocontroller ruft daraufhin im Verfahrensschritt 301 den Bootloader auf, um die Aktualisierung mit diesen Daten vornehmen zu können. In Verfahrensschritt 302 lädt dafür der Bootloader aus dem ROM, und zwar aus dem zweiten Speicherbereich B2 die Indizierung für die neuen Daten im zweiten Speicher EEPROM. In Verfahrensschritt 303 erfolgt dann die Aktualisierung der indizierten Bereich mit den neuen Daten im zweiten Speicher EEPROM.

Figur 4 zeigt ein weiteres Flussdiagramm des erfindungsgemäßen Verfahrens. In Verfahrensschritt 400 beginnt die Konsistenzprüfung. Diese Konsistenzprüfung erfolgt nach der Aktualisierung wie in Figur 3 angegeben. In Verfahrensschritt 401 wird die Marke geprüft, ob diese Marke an dieser Speicherstelle erwartet wird. Ist das nicht der Fall, wird zu Verfahrensschritt 405 gesprungen und ein Fehler ausgegeben. Dann kann das Anwendungsprogramm nicht gestartet werden.

Wurde die Marke erkannt, wird in Verfahrensschritt 402 die Prüfsumme geprüft. War der Prüfsummentest fehlerhaft, wird zu Verfahrensschritt 405 gesprungen. Wurde der Prüfsummentest bestanden, wird zu Verfahrensschritt 403 gesprungen. Hier wird das Format geprüft, beispielsweise die Länge des vorliegenden Speicherbereichs, der durch die Marke definiert ist. Wurde dieser Test nicht bestanden, wird zu Verfahrensschritt 405 gesprungen. Wurde der Formattest auch bestanden, wird zu Verfahrensschritt 404 gesprungen und festgestellt, dass die Konsistenz gegeben ist, so dass nunmehr das Anwendungsprogramm AW gestartet werden kann.

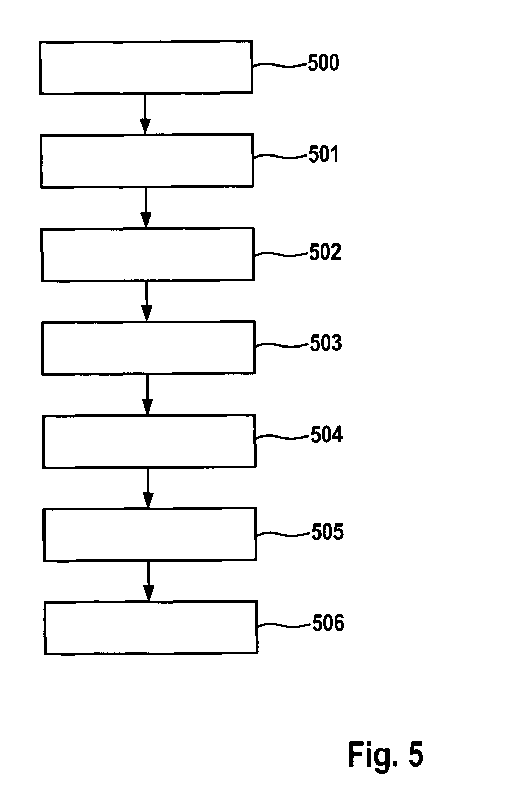

Figur 5 zeigt ein weiteres Flussdiagramm des erfindungsgemäßen Verfahrens. In Verfahrensschritt 500 werden die neuen Daten über die Schnittstelle IF importiert. Sodann erfolgt wie oben angegeben der Aufruf des Bootloaders. In Verfahrensschritt 502 wird die Indizierung aus dem ROM geladen, und zwar nunmehr aus dem ersten Bereich, um die neuen Daten für die Aktualisierung des zweiten Bereichs mithin des Anwendungsprogramms und der Indizierung für den zweiten Speicher vornehmen zu können. Diese Aktualisierung wird in Verfahrensschritt 503 vorgenommen.

In Verfahrensschritt 504 entnimmt der Bootloader dem zweiten Bereich des ersten Speichers, also dem ROM, die Indizierung für die Aktualisierung des zweiten Speichers mithin des EEPROMS. In Verfahrensschritt 505 erfolgt die Aktualisierung dieser indizierten Bereiche. In Verfahrensschritt 506 erfolgt dann wie oben dargestellt die Konsistenzprüfung.

## Patentansprüche

1. Steuergerät (SG) für ein Fahrzeug (FZ) mit:
- einem ersten Speicher (ROM), der einen ersten Bereich (B1) aufweist, in dem ein Bootloader (B) vorgesehen ist, und der einen zweiten Bereich (B2) aufweist, in dem wenigstens ein Anwendungsprogramm (AW) vorgesehen ist
- einem zweiten Speicher (EEPROM), in dem erste Daten für das wenigstens eine Anwendungsprogramm (AW) vorgesehen sind
- einer Schnittstelle (I F), die zweite Daten für eine Aktualisierung zumindest eines Teils der ersten Daten bereitstellt
- einer Steuerschaltung (µC), die den Bootloader (B) für die Aktualisierung des zumindest einen Teils der ersten Daten durch die zweiten Daten aufruft, wobei der Bootloader (B) dem zweiten Bereich (B2) des ersten Speichers (ROM) dritte Daten entnimmt, die angeben, in welchem dritten Bereich (S1 bis S4) des zweiten Speichers (EEPROM) die zweiten Daten für die Aktualisierung zu schreiben sind.

2. Steuergerät nach Anspruch 1, **dadurch gekennzeichnet, dass** die dritten Daten wenigstens einen ersten zusammenhängenden Adressbereich von Speicheradressen im zweiten Speicher (EEPROM) angeben.

3. Steuergerät nach Anspruch 1 oder 2, **dadurch gekennzeichnet, dass** der Bootloader (B) mit den zweiten Daten auf das wenigstens eine Anwendungsprogramm (AW) und damit die dritten Daten aktualisiert.

4. Steuergerät nach Anspruch 3, **dadurch gekennzeichnet, dass** im ersten Bereich (B1) des ersten Speichers (ROM) vierte Daten vorgesehen sind, die wenigstens einen zweiten zusammenhängenden Adressbereich der Speicheradressen im ersten Speicher (ROM) angeben.

5. Steuergerät nach einem der vorhergehenden Ansprüche, **dadurch gekennzeichnet, dass** der Bootloader (B) ein Konsistenzprüfungsmodul aufweist, wobei das Konsistenzprüfungsmodul wenigstens einen Teil der ersten Daten in den jeweiligen ersten Adressbereich dahingehend prüft, ob das wenigstens eine Anwendungsprogramm (AW) diesen Teil der ersten Daten in diesen jeweiligen Adressbereichen erwartet.

6. Steuergerät nach Anspruch 5, **dadurch gekennzeichnet, dass** für die Prüfung eine Marke und/oder eine Prüfsumme und/oder ein Format in den jeweiligen ersten Adressbereichen untersucht werden.

7. Steuergerät nach einem der vorhergehenden Ansprüche, **dadurch gekennzeichnet, dass** der erste Speicher (ROM) ein ROM und der zweite Speicher ein EEPROM sind.

8. Verfahren für eine Datenaktualisierung für ein Steuergerät für ein Fahrzeug mit folgenden Verfahrensschritten:
Bereitstellen eines ersten Speichers mit einem ersten Bereich (B1), in dem ein Bootloader (B) vorgesehen ist und mit einem zweiten Bereich (B2), in dem wenigstens ein Anwendungsprogramm (AW) vorgesehen ist
Bereitstellen eines zweiten Speichers (EEPROM), in dem erstem Daten für das wenigstens eine Anwendungsprogramm (AW) vorgesehen sind
- Bereitstellen von zweiten Daten durch eine Schnittstelle (I F) für eine Aktualisierung zumindest eines Teils der ersten Daten
- Aufrufen des Bootloaders (B) durch eine Steuerschaltung (µC) für die Aktualisierung des zumindest einen Teils der ersten Daten durch die zweiten Daten
- Entnehmen von dritten Daten aus dem zweiten Bereich (B2) des ersten Speichers (ROM) durch den Bootloader (B), wobei die dritten Daten angeben, in welchem dritten Bereich (S1 bis S4) des zweiten Speichers (EEPROM) die zweiten Daten für die Aktualisierung zu schreiben sind.

9. Verfahren nach Anspruch 8, **dadurch gekennzeichnet, dass** die dritten Daten wenigstens einen ersten zusammenhängenden Adressbereich von Speicheradressen im zweiten Speicher (EEPROM) angeben.

10. Verfahren nach Anspruch 8 oder 9, **dadurch gekennzeichnet, dass** der Bootloader (B) mit den zweiten Daten auf das wenigstens eine Anwendungsprogramm (AW) und damit die dritten Daten aktualisiert.

## Claims

1. Control device (SG) for a vehicle (FZ), having:
- a first memory (ROM) having a first area (B1), in which a boot loader (B) is provided, and a second area (B2), in which at least one application program (AW) is provided,
- a second memory (EEPROM), in which first data for the at least one application program (AW) are provided,
- an interface (IF) which provides second data for updating at least one part of the first data,
- a control circuit (µC) which calls the boot loader (B) in order to update the at least one part of the first data by means of the second data,
the boot loader (B) taking third data from the second area (B2) of the first memory (ROM), said third data indicating the third area (S1 to S4) of the second memory (EEPROM) to which the second data for the updating operation need to be written.

2. Control device according to Claim 1, **characterized in that** the third data indicate at least one first contiguous address space for memory addresses in the second memory (EEPROM).

3. Control device according to Claim 1 or 2, **characterized in that** the boot loader (B) uses the second data to update the at least one application program (AW) and thus the third data.

4. Control device according to Claim 3, **characterized in that** fourth data are provided in the first area (B1) of the first memory (ROM), said fourth data indicating at least one second contiguous address space for the memory addresses in the first memory (ROM).

5. Control device according to one of the preceding claims, **characterized in that** the boot loader (B) has a consistency check module, the consistency check module checking at least one part of the first data in the respective first address space in order to determine whether the at least one application program (AW) is expecting this part of the first data in these respective address spaces.

6. Control device according to Claim 5, **characterized in that** a mark and/or a checksum and/or a format in the respective first address spaces is/are examined for the check.

7. Control device according to one of the preceding claims, **characterized in that** the first memory (ROM) is a ROM and the second memory is an EEPROM.

8. Method for updating data for a control device for a vehicle, having the following method steps:
- a first memory having a first area (B1), in which a boot loader (B) is provided, and having a second area (B2), in which at least one application program (AW) is provided, is provided,
- a second memory (EEPROM), in which first data for the at least one application program (AW) are provided, is provided,
- an interface (IF) provides second data for updating at least one part of the first data,
- a control circuit (µC) calls the boot loader (B) in order to update the at least one part of the first data by means of the second data,
- the boot loader (B) takes third data from the second area (B2) of the first memory (ROM), the third data indicating the third area (S1 to S4) of the second memory (EEPROM) to which the second data for the updating operation need to be written.

9. Method according to Claim 8, **characterized in that** the third data indicate at least one first contiguous address space for memory addresses in the second memory (EEPROM).

10. Method according to Claim 8 or 9, **characterized in that** the boot loader (B) uses the second data to update the at least one application program (AW) and thus the third data.

## Revendications

1. Contrôleur (SG) pour un véhicule (FZ) comprenant :
- une première mémoire (ROM) qui présente une première zone (B1) dans laquelle est prévu un chargeur de démarrage (B) et qui présente une deuxième zone (B2) dans laquelle est prévu au moins un programme d'application (AW),
- une deuxième mémoire (EEPROM) dans laquelle sont prévues des premières données pour l'au moins un programme d'application (AW),
- une interface (IF) qui met à disposition des deuxièmes données pour une actualisation d'au moins une partie des premières données,
- un circuit de commande (µC) qui invoque le chargeur de démarrage (B) pour l'actualisation de l'au moins une partie des premières données par les deuxièmes données,
le chargeur de démarrage (B) prélevant de la deuxième zone (B2) de la première mémoire (ROM) des troisièmes données qui indiquent dans quelle troisième zone (S1 à S4) de la deuxième mémoire (EEPROM) doivent être écrites les deuxièmes données pour l'actualisation.

2. Contrôleur selon la revendication 1, **caractérisé en ce que** les troisièmes données indiquent au moins une première plage d'adresses continue d'adresses de mémoire dans la deuxième mémoire (EEPROM).

3. Contrôleur selon la revendication 1 ou 2, **caractérisé en ce que** le chargeur de démarrage (B) effectue l'actualisation avec les deuxièmes données sur l'au moins un programme d'application (AW) et ainsi les troisièmes données.

4. Contrôleur selon la revendication 3, **caractérisé en ce que** des quatrièmes données sont prévues dans la première zone (B1) de la première mémoire (ROM), lesquelles indiquent au moins une deuxième plage d'adresses continue des adresses de mémoire dans la première mémoire (ROM).

5. Contrôleur selon l'une des revendications précédentes, **caractérisé en ce que** le chargeur de démarrage (B) présente un module de contrôle de cohérence, le module de contrôle de cohérence contrôlant au moins une partie des premières données dans la première plage d'adresses correspondante pour vérifier si l'au moins un programme d'application (AW) attend cette partie des premières données dans ces plages d'adresses correspondantes.

6. Contrôleur selon la revendication 5, **caractérisé en ce que** le contrôle est effectué en analysant une marque et/ou une somme de contrôle et/ou un format dans les premières plages d'adresses correspondantes.

7. Contrôleur selon l'une des revendications précédentes, **caractérisé en ce que** la première mémoire (ROM) est une ROM et la deuxième mémoire est une EEPROM.

8. Procédé d'actualisation des données pour un contrôleur pour un véhicule, comprenant les étapes suivantes :
- mise à disposition d'une première mémoire comprenant une première zone (B1) dans laquelle est prévu un chargeur de démarrage (B) et comprenant une deuxième zone (B2) dans laquelle est prévu au moins un programme d'application (AW),
- mise à disposition d'une deuxième mémoire (EEPROM) dans laquelle sont prévues des premières données pour l'au moins un programme d'application (AW),
- mise à disposition de deuxièmes données par le biais d'une interface (IF) pour une actualisation d'au moins une partie des premières données,
- invocation du chargeur de démarrage (B) par un circuit de commande (µC) pour l'actualisation de l'au moins une partie des premières données par les deuxièmes données,
- prélèvement de troisièmes données de la deuxième zone (B2) de la première mémoire (ROM) par le chargeur de démarrage (B), les troisièmes données indiquant dans quelle troisième zone (S1 à S4) de la deuxième mémoire (EEPROM) doivent être écrites les deuxièmes données pour l'actualisation.

9. Procédé selon la revendication 8, **caractérisé en ce que** les troisièmes données indiquent au moins une première plage d'adresses continue d'adresses de mémoire dans la deuxième mémoire (EEPROM).

10. Procédé selon la revendication 8 ou 9, **caractérisé en ce que** le chargeur de démarrage (B) effectue l'actualisation avec les deuxièmes données sur l'au moins un programme d'application (AW) et ainsi les troisièmes données.
